# EUROPÄISCHE PATENTSCHRIFT

(11) **EP 0 981 803 B1**
(45) Veröffentlichungstag und Bekanntmachung des Hinweises auf die Patenterteilung: **16.01.2002**
(21) Anmeldenummer: 98933548.4
(22) Anmeldetag: 15.05.1998
(51) Int. Cl.: G06K 17/00

(54) **VORRICHTUNG UND VERFAHREN ZUR PERSONALISIERUNG VON CHIPKARTEN**
DEVICE AND METHOD FOR PERSONALISING CHIP CARDS
DISPOSITIF ET PROCEDE POUR LA PERSONNALISATION DE CARTES A PUCE

(30) Priorität: 15.05.1997 DE 19720431
(43) Veröffentlichungstag der Anmeldung: 01.03.2000
(73) Patentinhaber: BetaResearch Gesellschaft für Entwicklung und Vermarktung digitaler Infrastrukturen mbH, 85774 Unterföhring (DE)
(72) Erfinder: HAGN, Thomas, D-84028 Landshut (DE)
(74) Vertreter: Betten, Jürgen, Dipl.-Ing.
(86) Internationale Anmeldenummer: DE9801360
(87) Internationale Veröffentlichungsnummer: WO9852150

(56) Entgegenhaltungen:
- EP-A- 0 256 921
- EP-A- 0 266 926
- EP-A- 0 275 510
- WO-A-93/10509
- US-A- 4 825 054

## Beschreibung

Die vorliegende Erfindung betrifft eine Vorrichtung und ein Verfahren zur Personalisierung von Chipkarten.

Chipkarten werden in vielen Systemen mit hohen Sicherheitsanforderungen eingesetzt, um systeminterne Schlüssel den Kunden des Systems vor Ort bereitzustellen, ohne daß ein direkter Zugriff auf diese Schlüssel unter Umgehung des Systems möglich ist. Chipkarten werden als Sicherheits- bzw. Berechtigungsausweis eingesetzt und ermöglichen, über die auf ihnen gespeicherten Schlüssel und Algorithmen, eine sichere Authentifizierung und eine Verschlüsselung von Datenströmen. Auf Daten, die in Chipkarten während der Initialisierung und Personalisierung abgelegt werden, können nur authorisierte Systeme nach einer entsprechenden Authentifizierung zugreifen, bei der die Berechtigung überprüft wird.

Anwendungsbeispiele für Systeme mit Chipkarten sind z.B. Mobilfunksysteme, Banksysteme mit Bankkarten oder Pay-TV Systeme.

Bei der Initialisierung und Personalisierung von Chipkarten werden die für den späteren Einsatz notwendigen Daten in den Chip der Chipkarte programmiert. Diese in gewisser Weise noch zum Produktionsvorgang gehörenden Bearbeitungsphasen im Chipkarten-Lebenszyklus stellen in diesem Zusammenhang Prozesse dar, an die höchste Sicherheitsanforderungen gestellt werden müssen. So werden beispielsweise bei der Initialisierung und Personalisierung Schlüssel auf die Karte gebracht, die im späteren Einsatz der Karte benötigt werden, die aber auch, wenn sie ausspioniert werden, die Sicherheit des gesamten Anwendungssystems der Chipkarten gefährden könnten.

Bei der Initialisierung wird eine Chipkarte beispielsweise "programmiert", das heißt es werden Daten in die Chipkarte geschrieben, die sie in die Lage versetzen, die ihr zugedachte Funktion zu erfüllen. Bei der Personalisierung ist mindestens ein Teil der auf die Chipkarte aufgebrachten Daten einzigartig, das heißt für jede einzelne Chipkarte unterschiedlich, wodurch die Chipkarte individualisiert oder "personalisiert" wird. Die bei derartigen Vorgängen übertragenen Daten enthalten naturgemäß auch sicherheitsrelevante Daten wie etwa Schlüssel, aber auch die Abfolge von Befehlen sowie deren Struktur und Inhalt zur Durchführung einer Personalisierung oder Initialisierung selbst stellen bereits sicherheitskritische Informationen dar, die möglichst wenigen Personen zugänglich sein sollten.

In den herkömmlichen Systemen im Bereich der Chipkartenpersonalisierung ist die Komponente zur Durchführung der Ablauflogik, d. h. der Befehlsfolge der Chipkartenpersonalisierung, ein integraler Bestandteil des Systems, das auch das Kartenhandling und die Kartenkontaktierung durchführt. Kartenhandling heißt dabei das Zugänglichmachen der Chipkarte für Befehle und Daten von außen, also die Durchführung der elementar notwendigen physikalischen, hard- und softwäremaßigen Grundfunktionen, etwa das Kontaktieren der Karte und Versorgen der Karte mit der erforderlichen Betriebsspannung, aber auch etwa das Auslösen eines Reset der Karte, um so die Karte zur Durchführung einer Kommunikation mit der Außenwelt erst in die Lage zu versetzen.

Dies bedeutet, daß die Logik, die der Chipkartenpersonalisierung zugrunde liegt, die Algorithmen und Schlüssel dazu, in diesem System verankert sind und somit dem Lieferanten dieses Systemes bekannt gemacht werden bzw. im System abgelegt werden müssen. Diese Situation führt dazu, daß den Herstellern von Personalisierungssystemen sicherheitsrelevante Informationen über die Logik der Chipkartenpersonalisierung, Teile der Chipkarten-Kommandoschnittstelle, sowie über Algorithmen und Schlüssel gegeben werden müssen. Das Verteilen von Informationen mit einem so hohen Sicherheitsgrad stellt ein erhöhtes Sicherheitrisiko dar. Kenntnisse über die Logik der Chipkarten erleichtern Angriffe auf die Sicherheitsmechanismen des Chips auf der Karte. Sicherheitslöcher, die absichtlich oder unabsichtlich vom Hersteller in die Systeme gebracht wurden, könnten zur Kompromittierung der Chipkarten und zum Ausspähen von Schlüsseln führen und somit das Anwendungssystem der Chipkarte gefährden.

Aus der WO 93/10509 ist ein Verfahren zur Personalisierung und Initialisierung einer Chipkarte bekannt. Dabei werden vertrauliche Daten von einem geschützten Ausgabecomputer über eine Kommunikationsverbindung an einen Datenterminal geschickt. Daraufhin generiert das Datenterminal Chipkartenkommandos zur Personalisierung und Initialisierung einer mit dem Datenterminal zu verbindenden Chipkarte. Für die Generierung der Chipkartenkommandos benötigt das Datenterminal Informationen über die Kommandoschnittstelle der Chipkarte, was aus sicherheitstechnischen Überlegungen nachteilig ist, da das entfernte Datenterminal zusätzlich geschützt werden muss.

Aus der DE 19517818 ist ein Verfahren zur Ausgabe von individuellen Chipkarten an eine Mehrzahl von einzelnen Chipkartennutzern unter Verwendung einer neutralen Chipkartenausgabestation bekannt. Die Chipkartenausgabestation kommuniziert dabei zum Zwecke der Ladung einer Chipkarte mit Daten über ein Bedienmenü mit dem Nutzer. Die persönlichen Daten des Nutzers werden dabei zu einer entfernten Prüfstation über eine Kommunikationsverbindung übertragen, wobei nach der Prüfung die Programme und/oder Daten der Chipkartenausgabestation durch rückübersandte Daten von der Prüfstation veränderbar sind und die Chipkartenausgabestation die Chipkarte in Abhängigkeit der veränderten Programme und/oder Daten lädt. Damit benötigt auch in diesem Fall die Chipkartenausgabestation sicherheitsrelevante Informationen über die Generierung der Chipkartenkommandos.

Die europäische Patentanmeldung EP 0256921 offenbart ein Chipkartenpersonalisierungsapparat, der eine Vielzahl von Personalisierungseinheiten enthält, die durch einen Handhabungsroboter bedient werden.

Das US-Patent 4,825,054 offenbart ein Verfahren und eine Vorrichtung zum parallelen Initialisieren von Chipkarten entlang eines Kartentransferpfades, wodurch die Initialisierungszeit für eine Vielzahl von Chipkarten reduziert wird.

Es ist daher eine Aufgabe der vorliegenden Erfindung, eine Vorrichtung und ein Verfahren zur Chipkartenpersonalisierung zu schaffen, das eine erhöhte Sicherheit aufweist.

Eine weitere Aufgabe der vorliegenden Erfindung besteht in der Trennung der Sicherheitslogik (z.B. Befehlsofolge der Personalisierung, Authentifizierung, usw.) und des Kartenhandlings. Dabei sollte aber der Kommunikationsweg und die Anforderung der Anwendung von dem System vorgegeben werden, das die Chipkarten kontaktiert.

Ein wesentlicher Aspekt der vorliegenden Erfindung besteht darin, daß zum Durchführen von Personalisierung, Initialisierung oder sicherheitskritischen Chipkartenanwendungen ein separates Sicherheitssystem vorgesehen ist. Dabei werden elektronische administrative Bearbeitungsschritte (Personalisierung, Initialisierung) und sicherheitskritische Anwendungen mit Chipkarten (Authentifizierung) innerhalb der Chipkartenlebensdauer vom System zum Kartenhandling bzw. zur Chipkontaktierung getrennt.

Die Ablauflogik der elektronischen Personalisierung und Initialisierung von Chipkarten, die Chipkarten-Kommandoschnittstelle, d. h. die Softwareschnittstelle, die den der Chipkarte zur Verfügung stehenden Befehlssatz darstellt, ferner Algorithmen und die notwendigen Schlüssel zum Personalisieren werden in einem zentralen Sicherheitssystem implementiert, das nach einer Anforderung von einem sogenannten Chipkarten-Kontrollsystem, das das Kartenhandling und -kontaktieren durchführt, diese Aufgaben durchführen kann.

Das System zum Kartenhandling und -kontaktieren sorgt dafür, daß ein sogenannter logischer Kommunikationskanal zwischen dem Chip der Karte und dem Sicherheitssystem zur elektronischen Personalisierung und Initialisierung aufgebaut wird.

Unter einem Kommunikationskanal ist dabei eine Verbindung zwischen zwei an der Kommunikation beteiligten Partnern zu verstehen, über die Daten ausgetauscht werden können. Die Verbindung muß nicht unbedingt direkt zwischen den beiden Partnern bestehen, sondern kann über eine oder mehrere Zwischenstationen erfolgen, so daß dann anstelle einer tatsächlichen direkten Verbindung eine indirekte oder "logische Verbindung" zwischen den Partnern besteht. Die Kommunikationsendpunkte sind in einem solchen Fall nicht direkt miteinander verbunden, sondern entlang eines Datenpfades, der eine Verknüpfung oder Verbindung zwischen den beiden Kommunikationsendpunkten herstellt und einen Datenweg oder "logischen Kommunikationskanal" zur Verfügung stellt, über den der Datenaustausch zwischen den Kommunikationsendpunkten unabhängig von dem tatsächlichen hardwaremäßigen Verbindungsweg zwischen den beiden Kommunikationsendpunkten - ob direkt oder über eine Zwischenstation - in korrekter Weise erfolgen kann. Der zu verwendende logische Kommunikationskanal wird dem zentralen Sicherheitssystem in einer Anforderung zur Durchführung einer Chipkartenpersonalisierung oder einer anderen Chipkartenanwendung mitgeteilt.

Das zentrale System zum Durchführen der Personalisierung, Initialisierung, Konfigurierung einer Chipkarte, oder zur Durchführung einer Chipkartenanwendung ermöglicht in einem bevorzugten Ausführungsbeispiel die Anbindung an verschiedene Kartenhandlingsysteme bzw. sogenannte Chipkarten-Kontrollsysteme. Das System erhält eine Anforderung eines Chipkarten-Kontrollsystems zum Durchführen einer Chipkartenpersonalisierung, -initialisierung oder -anwendung und führt im Anschluß daran die angeforderte Ablauflogik (z.B. Personalisieren einer Chipkarte), das heißt die entsprechende Abfolge von Befehlen und Daten über einen logischen Kommunikationskanal durch, der einen Datenpfad zwischen dem zentralen System und der Chipkarte darstellt.

In der Anforderung an das zentrale System zur Personalisierung, Initialisierung, Konfigurierung einer Chipkarte oder zum Durchführen einer Chipkartenanwendung werden die für die Durchführung der angeforderten Anwendung bzw. der ihr entsprechenden Ablauflogik, d. h. der ihr entsprechenden Folge von Befehlen, notwendigen Informationen übertragen, beispielsweise Informationen über das zu verwendende Kommunikationsprotokoll. Wenn nachfolgend der Einfachheit halber lediglich von einer angeforderten Anwendung die Rede ist, so sei damit auch die Möglichkeit eingeschlossen, daß es sich bei der angeforderten Anwendung neben weiteren Chpikartenanwendungen insbesondere auch um eine Personalisierung oder um eine Initialisierung einer Chipkarte handeln kann.

Die Kommunikation der Kommandos und Nachrichten (Messages) zu und von der Chipkarte verläuft transparent, das heißt die übertragenen Daten werden unverändert zwischen den beteiligten Kommunikationspartnern übertragen, beziehungsweise die von einem Endpunkt der Kommunikation (Chipkarte oder zentrales System) zum anderen Endpunkt (zentrales System oder Chipkarte) abgesandten Daten erreichen ihren Bestimmungsort in unveränderter Form. Ein solcher transparenter Kommunikationskanal wird vom System zum Kartenhandling und Kartenkontaktieren, dem Kontrollsystem, bereitgestellt oder aufgebaut. Der Kommunikationsweg, also der Eintrittspunkt des logischen Kommunikationskanals in das Chipkarten-Kontrollsystem, über den die Kommunikation stattfinden soll, und das Kommunikationsprotokoll werden bei der Anforderung der Anwendung dem zentralen Sicherheitssystem mitgeteilt.

Nachfolgend wird die vorliegende Erfindung anhand mehrerer Ausführungsbeispiele unter Bezugnahme auf die beiliegenden Zeichnungen im Detail beschrieben. Dabei zeigen:
Fig. 1 eine schematische Darstellung des Gesamtkonzepts gemäß einem ersten Ausführungsbeispiel der vorliegenden Erfindung;
Fig. 2 eine schematische Darstellung der Verfahrensschritte gemäß dem ersten Ausführungsbeispiel der vorliegenden Erfindung;
Fig. 3 eine schematische Darstellung der Elemente des Gesamtkonzepts gemäß einem zweiten Ausführungsbeispiel der vorliegenden Erfindung.

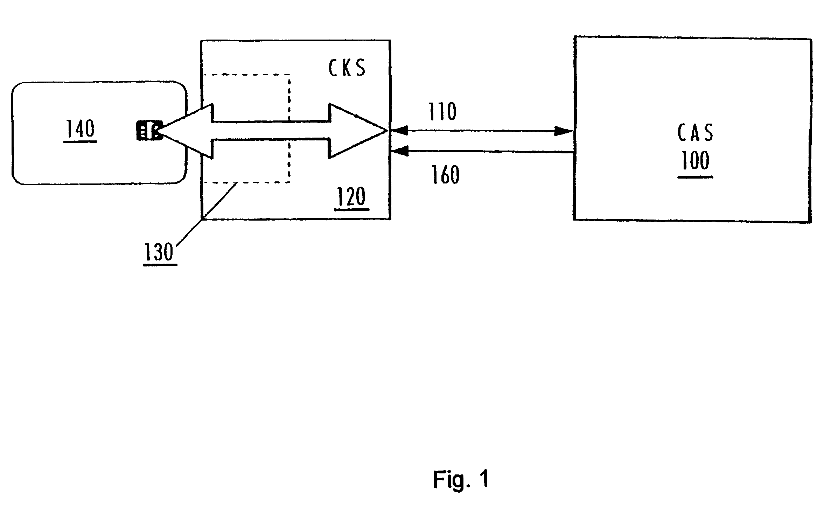

Nachfolgend werden die Elemente eines ersten Ausführungsbeispiels der Erfindung unter Bezugnahme auf Figur 1 näher erläutert.

Ein Chipkarten-Administrationssystem (CAS) 100 gemäß Figur 1 ist ein System zur Personalisierung, Initialisierung bzw. zur Durchführung von sicherheitskritischen Anwendungen mit Chipkarten (z.B. Authentifizierung). Es ist über einen Kommunikationskanal 110, d. h. über eine Verbindung entlang derer Daten ausgetauscht werden können, mit einem Chipkartenkontrollsystem (CKS) 120 verbunden. Ein Chipkarten-Koppler 130 ist Bestandteil des Kontrollsystems 120 und ist für die physikalische Kontaktierung einer Chipkarte 140 verantwortlich.

Ein Chipkarten-Koppler 130 wird hier als integraler Bestandteil des Chipkarten-Kontrollsystems betrachtet. Er führt die Kommunikation mit der Chipkarte auf der physikalischen Ebene durch und veranlaßt den Chipkarten-Reset durch das entsprechende elektronische Signal. Üblicherweise stellt der Chipkarten-Koppler dem Chipkarten-Kontrollsystem CKS eine Kommandoschnittstelle, das heißt einen bestimmten Satz von Befehlen zur Verfügung, die er dann jeweils in die entsprechende für die Chipkarte verständliche elektronische Signalfolge umwandelt. Auf der Basis dieser Kommandoschnittstelle kommuniziert das Chipkarten-Kontrollsystem mit der Chipkarte.

Ein dadurch realisierter Kommunikationskanal 150 stellt eine Verbindung zwischen der Chipkarte 140 und dem Chipkarten-Kontrollsystem CKS 120 her. Der Kommunikationskanal 150 und der Kommunikationskanal 110 bilden zusammen einen logischen Kommunikationskanal, der den Datenaustausch zwischen der Chipkarte 140 und dem Chipkartenadministrationssystem 100 ermöglicht.

Der Datenaustausch zwischen dem CKS und dem CAS über den Kommunikationskanal 110 erfolgt dabei nach einem bestimmten Protokoll. Gemäß diesem Protokoll werden etwa die vom CAS an das CKS zu übertragenden Daten "gepackt", d. h. formatiert, und die vom CKS empfangenen Daten werden "entpackt", d. h. die entsprechenden Nutzdaten, beispielsweise Befehle für die Chipkarte, werden in dem eintreffenden Datenstrom identifiziert und diese werden dann wiederum über den Kommunikationskanal 150 an die Chipkarte 140 weitergeleitet.

Über einen weiteren zur Steuerung dienenden Kommunikationskanal 160 können Befehle und Nachrichten zwischen dem Kontrollsystem 120 und dem Chipkarten-Administrationssystem 100 ausgetauscht werden, wodurch dem Chipkarten-Administrationssystem eine steuernde Einflußnahme auf das Kontrollsystem ermöglicht wird.

Dabei können die beiden Kommunikationskanäle 160 durchaus über die hardwaremäßig gleiche Verbindung realisiert werden. Dies geschieht beispielsweise, indem das Kommunikationsprotokoll beziehungsweise die Steuerdaten oder Header der übertragenen Daten eine Identifikation des Bestimmungsortes vorsehen und somit den Kommunikationskanal bezüglich seines Start- und Zielpunktes identifizieren und definieren. Das CKS ist dann beispielsweise in der Lage, die über eine einzige hardwaremäßige Leitung eintreffenden Daten bezüglich ihres Zielortes, etwa Chipkarte oder CKS selbst, zu identifizieren und entsprechend weiterzuleiten oder selbst zu verarbeiten.

Das Chipkarten-Administrationssystem führt seine Aufgaben auf Anforderung von dem Chipkarten-Kontrollsystem CKS hin durch. Dem Chipkarten-Administrationssystem CAS werden dazu vom Chipkarten-Kontrollsystem die beiden Kommunikationskanäle 110 und 160, beziehungsweise die CKS-seitigen Kommunikationsendpunkte zur Ausbildung der Kommunikationskanäle zur Verfügung gestellt, die zum einen die Kommunikation mit der Chipkarte 140 über den weiteren Kommunikationskanal 150, zum anderen die Kommunikation mit dem Kontrollsystem 120 ermöglichen.

Das Chipkarten-Administrationssystem CAS hat alle Schlüssel und Algorithmen, die notwendig sind, um die notwendige Anwendungslogik für die Initialisierung, Personalisierung oder die sicherheitsrelevanten Anwendungen wie etwa eine Authentifizierung mit der Karte durchzuführen. Erst nachdem das Chipkarten-Kontrollsystem 120 den Chip der Karte kontaktiert und einen Kommunikationskanal zum Chip eingerichtet hat, kann das Chipkarten-Administrationssystem CAS seine Aufgaben durchführen.

Das Chipkarten-Kontrollsystem ist ein System, das eine Kontaktierung des Chips der Karte herstellt und somit eine Kommunikation mit dem Chip ermöglicht. Dies geschieht, indem zunächst der physikalische Kontakt zum Chip der Karte hergestellt wird. Daraufhin wird gemäß ISO 7816 ein Reset der Chipkarte durchgeführt, das heißt die Chipkarte wird durch Anlegen eines bestimmten Signals, des sogenannten Reset-Signals, veranlaßt, mit einer Antwortnachricht, dem sogenannten "Answer to Reset ATR" zu antworten. Diese Antwortnachricht enthält beispielsweise Daten, die die Chipkarte bezüglich des zu verwendenden Kommunikationsprotokolls, der Taktfrequenz, etc., identifizieren. Das Chipkarten-Kontrollsystem CKS stellt dann den ersten Kommunikationskanal 110, bzw. den entsprechenden CKS-seitigen Kommunikationsendpunkt, für das Chipkarten-Administrationssystem CAS 100 bereit und baut so zusammen mit dem CAS den logischen Kommunikationskanal zwischen Chipkarte und Chipkarten-Administrationssystem entlang der Kommunikationskanäle 110 und 150 auf. Ein zweiter Kommunikationskanal 160 zwischen Chipkarten-Kontrollsystem CKS und Chipkarten-Administrationssystem CAS wird zur Abstimmung und Kontrolle zwischen beiden Systemen vom Chipkarten-Kontrollsystem zur Verfügung gestellt.

Der logische Kommunikationskanal zwischen Chipkarte und Chipkarten-Administrationssystem CAS, bestehend aus den beiden Kommunikationskanälen 110 und 150, ist ein transparenter Kommunikationskanal, das heißt die Kommunikation zwischen CAS und Chipkarte erfolgt transparent. Transparente Kommunikation heißt dabei, daß die jeweils vom CAS abgeschickten Befehle oder Daten, die direkt für die Chipkarte bestimmt sind, unverändert an die Chipkarte übertragen werden. Umgekehrt werden Nachrichten, die von der Chipkarte stammen und für das CAS bestimmt sind, unverändert über den transparenten logischen Kommunikationskanal an das CAS übertragen. Handelt es sich also bei den ausgetauschten Informationseinheiten um sogenannte Datentelegramme, die einen Steuerteil und einen Datenteil umfassen, so werden die direkt für einen Kommunikationszielpunkt, also Chipkarte oder CAS, bestimmten Teile dieser Datentelegrammme unverändert an den entsprechenden Kommunikationszielpunkt übertragen. Das Chipkarten-Kontrollsystem stellt also einen transparenten logischen Kommunikationskanal als eine Verbindung zwischen Chipkarte und Chipkarten-Administrationssystem zur Verfügung.

Gemäß dem ersten Ausführungsbeispiel der Erfindung tritt das System zum Handling von Chipkarten bzw. zum Kontaktieren von Chips, das Chipkarten-Kontrollsystem CKS, zwecks Durchführen einer elektronischen Personalisierung bzw. Initialisierung von Chipkarten oder zur Durchführung einer Chipkartenapplikation mit dem Chipkarten-Administrationssystem CAS als einem separaten Sicherheitssystem in Verbindung und fordert die Ausführung einer dieser Anwendungen für eine Chipkarte über den Kommunikationskanal 160 an. Als Anwendungen kommen hier elektronische administrative Bearbeitungsschritte an Chipkarten (Personalisierung, Initialisierung) oder sicherheitskritische Anwendungen mit Chipkarten (z.B. Authentifizierung) innerhalb des Lebenszyklus einer Chipkarte in Frage. Für den Fall einer Personalisierung werden dabei beispielsweise spezielle Schlüssel für jede Chipkarte und/oder Algorithmen bzw. sonstige Daten auf die Chipkarte aufgebracht, die die Chipkarte dann als eine ganz spezielle Chipkarte mit entsprechender Funktion ausweisen und sie so als die spezielle Chipkarte ihres jeweiligen Benutzers kenntlichmachen oder personalisieren.

Nach Anforderung der Anwendung durch das Chipkarten-Kontrollsystem CKS führt das Chipkarten-Administrationssystem CAS eine Ablauflogik für die angeforderte Anwendung aus. Die Ablauflogik besteht dabei aus einer Folge von Befehlen und Daten an die Chipkarte sowie den zugehörigen Antwortnachrichten, die in ihrer Summe die angeforderte Anwendung darstellen. Im Verlauf der Anwendung werden über den beschriebenen transparenten logischen Kommunikationskanal die Befehle und Daten transparent an die Chipkarte gesandt und umgekehrt, über den gleichen logischen Kommunikationskanal, resultierende Meldungen oder Antwortnachrichten von der Chipkarte vom Chipkarten-Administrationssystem CAS empfangen. Dieser logische Kommunikationskanal stellt somit eine transparente Verbindung zwischen Chipkarte und Chipkarten-Administrationssystem CAS her. Das Chipkarten-Kontrollsystem CKS baut diese Verbindung auf und gewährleistet die transparente Übertragung von Datentelegrammen von und zur Chipkarte.

Informationen über den zu verwendenden Kommunikationkanal werden in der Anforderung der Anwendung durch das Chipkarten-Kontrollsystem CKS an das Chipkarten-Administrationssystem übermittelt. Die über die Anforderung übertragenen Informationen enthalten u.a. die Kommunikationsadresse, d. h. die Identifizierung des zuverwendenden Eintrittspunkts des Kommunikationskanals in das CKS, sowie ferner das Kommunikationsprotokoll, die für den bereitgestellten Kommunikationskanal verwendet werden müssen, und Informationen über die Anwendung, die durchzuführen ist. Beginnt eine Chipkartenanwendung mit einem Reset der Chipkarte nach ISO 7816 wird dieser Chipkartenreset vor der Anwendungsanforderung vom Chipkarten-Kontrollsystem durchgeführt und die Ergebnisse des Resets (Answer to Reset) werden ebenfalls in der Anwendungsanforderung an das Chipkarten-Administrationssystem übertragen.

Auch während der Ausführung der Ablauflogik der angeforderten Anwendung kann unter Umständen das Chipkarten-Kontrollsystem vom Chipkarten-Administrationssystem zu einem Reset der Karte aufgefordert werden, etwa falls dies als ein Teil der Ablauflogik vorgesehen ist. Dies kann aber beispielsweise auch geschehen, wenn bei der Durchführung der Anwendung ein Fehler aufgetreten ist. Der Reset wird dann vom CAS angefordert und die resultierenden ResetInformationen werden dann nach dem Reset dem Chipkarten-Administrationssystem mitgeteilt. Daraufhin kann erneut die zur Durchführung der Anwendung erforderliche Ablauflogik unter Verwendung der transparenten Kommunikation durchgeführt werden oder, falls der Reset Teil der Ablauflogik ist, sie an der entsprechenden Stelle fortgesetzt werden.

Nach Beendigung der Ablauflogik teilt das Chipkarten-Administrationssystem dem Chipkarten-Kontrollsystem das Ende der Anwendung zusammen mit einem Ergebnis oder einer Resultatnachricht bezüglich der Anwendung mit. Dieses Ergebnis kann beispielsweise in der Meldung bestehen, daß die Anwendung erfolgreich durchgeführt wurde, es sind jedoch auch noch weitere Formen und Inhalte der Resultatnachricht denkbar. So kann die Resultatnachricht auch weitere Informationen bezüglich der durchgeführten Anwendung enthalten. Bei erfolgreicher Durchführung der Anwendung kann der zur Durchführung der Anwendung aufgebaute transparente logische Kommunikationskanal nun wieder abgebaut werden und die Chipkarte kann dekontaktiert werden. wurde die Anwendung nicht erfolgreich durchgeführt kann aber auch beispielsweise ein neuer Versuch gestartet werden.

Die einzelnen Teilschritte die gemäß dem ersten Ausführungsbeispiel der Erfindung durchgeführt werden, sind nachfolgend noch einmal summarisch aufgelistet:
1) Chipkarten-Reset, ausgelöst durch das Chipkarten-Kontrollsystem CKS bzw. dem Chipkarten-Koppler nach erfolgter Chipkontaktierung.
2) Aufbauen eines logischen Kommunikationskanals für eine transparente Kommunikation zwischen Chipkarte und Chipkarten-Administrationssystem durch das Chipkarten-Kontrollsystem.
3) Anforderung einer Anwendung, übermittelt an das Chipkarten-Administrationssystem, mit Informationen über den zu verwendenden Kommunikationskanal, über den Chip-Reset aus Schritt 1 ("answer to reset"-Informationen) und über die Anwendung, die durchzuführen ist.
4) Transparente Kommunikation zwischen Chipkarten-Administrationssystem und Chipkarte zur direkten Übermittlung von Kartenkommandos und Antwortnachrichten während der Durchführung der Ablauflogik der Anwendung. Die transparente Kommunikation wird dabei durch das Chipkarten-Kontrollsystem gewährleistet.
5) Falls erforderlich (z.B. bei Personalisierung), Anforderung eines Chip-Resets vom Chipkarten-Administrationssystems und der Resetinformation durch das Chipkarten-Kontrollsystem.
6) Mitteilen eines Ergebnisses bezüglich der Anwendung an das Chipkarten-Kontrollsystem durch das Chipkarten-Administrationssystem.
7) Eventuell Abbau des logischen Kommunikationsweges durch das Chipkarten-Kontrollsystem.

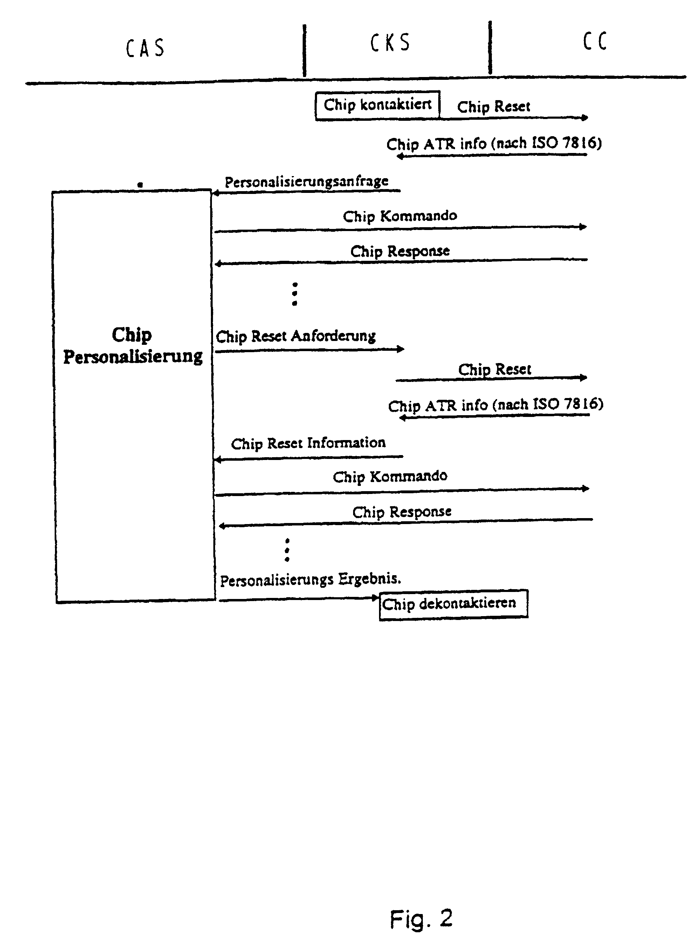

Der Ablauf ist für den Fall einer Chipkartenpersonalisierung gemäß dem ersten Ausführungsbeispiel in Figur 2 schematisch dargestellt. Dabei stellt die linke Seite das CAS dar, in dem die Personalisierung durchführt wird. Über den mittleren Teil, das CKS, werden Kommandos und Antwortnachrichten (Responses) über den Koppler CC transparent an die Chipkarte übertragen. Folgende Grundprinzipien liegen dem beschriebenen Konzept zugrunde:
- transparenter logischer Kommunikationskanal:
   Das Chipkarten-Kontrollsystem ermöglicht eine transparente Kommunikation zwischen Chipkarte und Chipkarten-Administrationssystem durch Bereitstellung eines transparenten logischen Kommunikationskanals.
- Anforderung der Anwendung:
   Eine Anforderung zum Durchführen einer Anwendung wird vom Chipkarten-Kontrollsystem an das Chipkarten-Administrationssystem CAS gesandt. Die Anforderung enthält Informationen über die auszuführende Anwendung und den dafür zu verwendenden transparenten logischen Kommunikationskanal sowie das Kommunikationsprotokoll. Es werden also mit der Anforderung folgende Informationen übertragen:
   - Informationen bezüglich der Kommunikation (Adresse des zur Verfügung gestellten Kommunikationskanals, des zu verwendenden Protokolls)
   - Identifikation der angeforderten Anwendung
   - Informationen bezüglich der kontaktierten Chipkarte aus den Resetinformationen (answer to reset)
   - gegebenenfalls eine Identifikationskennung der Anwendungsanforderungen der Chipkarte innerhalb des Chipkarten-Kontrollsystems zur Ermöglichung der Re-Identifizierung der Anwendungsanforderungen,
- Rückmeldung des Anwendungsergebnisses:
   Das Chipkarten-Administrationssystem meldet ein Ergebnis bezüglich der Anwendungsdurchführung an das Chipkarten-Kontrollsystem zurück. Die Rückmeldung enthält dabei folgende Informationen:
   - Ergebnis bezüglich der Anwendung, die sogenannte Resultatnachricht
   - gegebenenfalls eine Identifikation der Anwendungsanforderungen der Chipkarte innerhalb des Chipkarten-Kontrollsystem

Der Personalisierungsprozeß wird nach dem oben beschriebenen Konzept von zwei getrennten Systemen, dem Chipkarten-Kontrollsystem CKS und dem Chipkarten-Administrationssystem CAS durchgeführt. Das Chipkarten-Kontrollsystem übernimmt dabei das Handling bzw. das Kontaktieren der Chipkarte und führt die Kommunikation über den Chipkarten-Koppler auf der physikalischen Ebene durch. Im Chipkarten-Kontrollsystem müssen keine Informationen über Ablauflogik, Chipkarten-Kommandoschnittstelle, Schlüssel und Algorithmen der elektronischen administrativen Chipkartenbearbeitung und der Chipkartenapplikationen gespeichert werden. Das Chipkarten-Kontrollsystem sorgt dafür, daß eine elektrische Verbindung mit dem Chip auf der Karte hergestellt wird, und dient als Router, das heißt als Zwischenstation, für die transparente Kommunikation mit der Chipkarte. Das Chipkarten-Kontrollsystem bestimmt als auslösendes bzw. anforderndes System die Art der Anwendung die vom Chipkarten-Administrationssystem durchgeführt werden soll.

Die Durchführung der Anwendung dagegen findet im Chipkarten-Administrationssystem statt. Ablauflogik, Algorithmen für die Anwendung mit der Chipkarte und entsprechende Schlüssel können hier in einem separaten System gespeichert und gut abgesichert werden. Spezifische Kenntnis über die Ablauflogik in der Chipkarte, die Chipkarten-Komandoschnittstelle und die Algorithmen werden somit nur zur Entwicklung des Chipkarten-Administrationssystems benötigt.

Die Kommunikation zwischen Chipkarten-Kontrollsystem und Chipkarten-Administrationssystem kann über ein Standardnetzwerk durchgeführt werden. Über den Anforderungsmechanismus können das Protokoll und der logische Kommunikationskanal, der für die Anwendung zu verwenden ist, in der Anforderung definiert werden.

Es können über ein zentrales Chipkarten-Administrationssystem verschiedene Anwendungen, wie Personalisierung, Initialisierung, Chipkarten-Authentifizierung, gleichzeitig betrieben werden. Alle dafür notwendigen sicherheitsrelevanten Daten und Algorithmen müssen dazu nur in einem zentralem Sicherheitssystem implementiert und verwaltet werden.

Über den Mechanismus der Anwendungsanforderung an das Chipkarten-Administrationssystem können die verschiedenen Anwendungen von verschiedenen Partnersystemen bzw. Chipkarten-Kontrollsystemen angefordert werden. Welche Kommunikationsmechanismen dabei verwendet werden sollen, wird jeweils bei der Anwendungsanforderung dem Chipkarten-Administrationssystem übermittelt.

So kann z.B. ein Point-of-Sales (POS)-Kartenleser, der über eine WAN-Verbindung zu erreichen ist, eine Rekonfiguration einer Chipkarte anfordern, während parallel ein Personalisierungssystem mit hohem Produktionsdurchsatz eine Personalisierungssequenz vom Chipkarten-Administrationssystem über eine LAN-Kommunikation anfordert.

Nachfolgend wird noch das Anwendungsbeispiel einer "Point of Sales (POS)"-Personalisierung beschrieben, also beispielsweise an einem dem Kunden zugänglichen Terminal.

Nachdem eine Kundenchipkarte in einem Chipkarten-Kontrollsystem kontaktiert wurde, wird eine Anfrage zur Personalisierung über ein WAN-Netzwerk an ein zentrales Chipkarten-Administrationssystem gesendet. Das Chipkarten-Administrationssystem verwendet den in der Anwendungsanforderung übertragenen Kommunikationskanal zur Chipkarten-Personalisierung. Ein Authentifizierung der Chipkarte mit dem Chipkarten-Administrationssystem wird durch eine gegenseitige Authentifizierung oder "mutual authentication" erreicht. Als zusätzlichen Sicherheitsmechanismus für die Aktion über das WAN/LAN-Netzwerk kann eine zusätzliche Verschlüsselung bei der Kommunikation überlagert werden. Informationen bezüglich der Methode der Verschlüsselung und Indizes auf die zu verwendenden Schlüssel können bei der Personalisierungsanforderung an das Chipkarten-Administrationssystem durch das Chipkarten-Kontrollsystem übertragen werden.

Ein typischer Anwendungsfall könnte eine Rekonfigurierung der Chipkarte entsprechend bestimmter am Point of Sales, also etwa an einem Terminal, vom Kunden definierter Anforderungen sein.

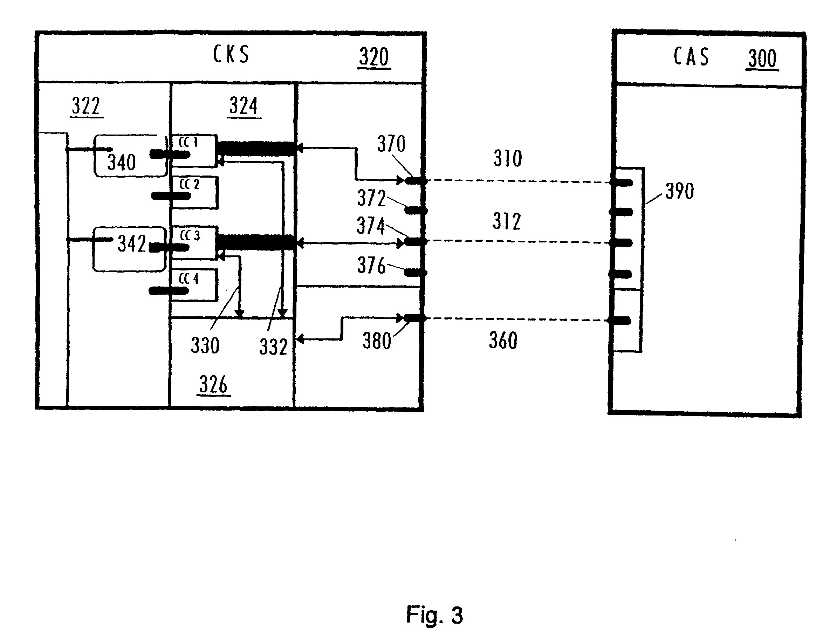

Nachfolgend wird unter Bezugnahme auf Fig. 3 ein zweites Ausführungsbeispiel der vorliegenden Erfindung beschrieben.

In diesem Ausführungsbeispiel werden mehrere Chipkarten 340 und 342 von einer Transporteinheit 322, die einen Teil des Chipkarten-Kontrollsystems 320 darstellt, transportiert und von einer Chipkarten-Kopplereinheit 324, die ebenfalls einen Teil des Chipkarten-Kontrollsystems 320 darstellt, kontaktiert. Die Kopplereinheit umfaßt dabei mehrere einzelne Koppler CC1 bis CC4, die jeweils eine Chipkarte kontaktieren können.

Ein Chipkarten-Administrationssystem (CAS) 300 ist auch im vorliegenden Beispiel ein Personalisierungssystem, das den Personalisierungsprozeß der Chipkarten durchführt. Nach dem Kontaktieren der Chipkarten wird es von dem Chipkarten-Kontrollsystem aufgerufen, und das Chipkarten-Administrationssystem CAS erzeugt die Personalisierungskommandos, leitet sie weiter und empfängt und verarbeitet die Antwortnachrichten von der Chipkarte. Das CAS ist auch hier kein Teil des Chipkarten-Kontrollsystems, sondern eine separate Vorrichtung, die mit dem Chipkarten-Kontrollsystem kommuniziert. Das Chipkarten-Kontrollsystem ist nicht mit der Erzeugung oder der Verschlüsselung von Chipkarten-Personalisierungskommandos und -nachrichten betraut.

Anstelle einer Personalisierung kann jedoch auch eine andere Anwendung vom CAS analog durchgeführt werden, beispielsweise eine Programmierung oder Verschlüsselung der Chipkarten. Auch in diesem Fall werden die entsprechenden Befehle vom CAS erzeugt und an die Chipkarte transparent übertragen.

Das Chipkarten-Kontrollsystem dient im Wesentlichen zum Weiterleiten von Nachrichten, um die Personalisierungsnachrichten zwischen der Chipkarte und dem Chipkarten-Administrationssystem weiterzuleiten. Die Antwortnachrichten der Chipkarte sind gemäß dem definierten Kommunikationsprotokoll gepackt und werden über den entsprechenden Kommunikationskanal an das CAS weitergeleitet. Darüber hinaus ist das Chipkarten-Kontrollsystem als Steuerungseinheit mit dem Transport und dem Kontaktiermechanismus für die Chipkarten betraut. Hierfür ist im CKS eine Steuereinheit 326 vorgesehen.

Die Steuereinheit 326 steuert die Transporteinheit dabei beispielsweise so, daß neue Chipkarten, die personalisiert werden sollen, durch die Transporteinheit einem der Chipkarten-Koppler CC1 bis CC4 zugeführt und von diesem kontaktiert werden. Nach erfolgreicher Personalisierung werden die Chipkarten dann weitertransporiert und im Falle nicht erfolgreicher Personalisierung aussortiert. So können dann Chipkarten in großer Stückzahl personalisiert werden.

Das CKS löst durch eine entsprechende Anforderung die Personalisierungsverarbeitung aus, nachdem die Chipkarte physikalisch kontaktiert wurde. Das CKS, bzw. die Steuereinheit 326 des CKS, veranlaßt ferner über schematisch dargestellte Koppler-Kommunikationskanäle 330 und 332, die Verbindungen zwischen der Steuereinheit und den Chipkarten-Kopplern darstellen, die Auslösung des Reset durch die Koppler CC1 und CC3. Sie erhält daraufhin die "Answer-to-Reset"-Informationen, die von der Chipkarte ausgegeben werden, und überträgt diese mit einer Personalisierungsanforderung an das Chipkarten-Administrationssystem.

Nachfolgend wird unter Bezugnahme auf Figur 3 die Arbeitsweise der Kommunikationskanäle genauer beschrieben. Beim vorliegenden Ausführungsbeispiel sind mehrere Chipkarten-Koppler CC1 bis CC4 in das CKS integriert. Für jeden dieser Chipkarten-Koppler CC1 bis CC4 stellt das CKS einen Kommunikationskanal, bzw. einen entsprechenden CKS-seitigen Kommunikationsendpunkt 370 bis 376 zur Verfügung, der die Übertragung von Daten zwischen dem CAS und der Chipkarte ermöglicht. In Figur 3 sind die beiden Kommunikationskanäle 310 und 312 realisiert. Alle Personalisierungskommandos werden unter Verwendung dieser Kanäle an die entsprechenden Chipkarten-Koppler und dann weiter an die Chipkarte geleitet, bzw. werden umgekehrt die Chipkartenantworten auf die Kommandos an das CAS gesandt.

So wird beispielsweise über den Kommunikationskanal 310 eine Verbindung vom CAS zum CKS-seitigen Kommunikationsendpunkt 370 hergestellt, von dort geht die Verbindung weiter über den Koppler CC1 zu der Chipkarte 340 und bildet so einen logischen Kommunikationskanal zwischen CAS und der Chipkarte 340. Im Fall der Chipkarte 342 läuft die Verbindung analog über den Kommunikationskanal 312.

Beim vorliegenden Ausführungsbeispiel verläuft die Kommunikation zwischen dem CKS und dem CAS unter Verwendung einer TCP/IP-Socketverbindung. Ein Socket ist ein Kommunikationsendpunkt. Das CKS liefert dabei Serversockets 370 bis 380 und das CAS stellt als Client unter Verwendung von Client-Sockets 390 die Verbindung zu diesen Server-Sockets her. Die vom CKS zur Verfügung gestellten Sockets lassen sich logisch in zwei Gruppen klassifizieren. Jede der Gruppen wird dazu verwendet, unterschiedliche Arten von Nachrichten zwischen dem CKS und dem CAS zu übertragen. Die zwei Gruppen sind der Steuersocket 380 und die Personalisierungssockets 370 bis 376.

Die Schnittstellen zwischen dem Chipkarten-Kontrollsystem CKS und dem externen Chipkarten-Administrationssystem CAS sind also Sockets in einer TCP/IP-Verbindung. Über diese Verbindung verlaufen die logischen Kommunikationskanäle zwischen den Chipkarten und dem Chipkarten-Administrationssystem

Neben den Personalisierungssockets wird also vom CKS ein weiterer Kommunikationskanal 360 für Personalisierungssteuernachrichten aufgebaut, und zwar unter Verwendung des Steuersockets. Unter Verwendung dieser Personalisierungssteuernachrichten wird der Personalisierungsvorgang durch eine Personalisierungsanforderungnachricht ausgelöst und die Erledigung wird mit einer Resultatnachricht bestätigt.

Nachdem die Chipkarte physikalisch kontaktiert wurde, wird durch das CKS ein Reset der Karte ausgelöst. Das CKS startet den Chipkarten-Programmierungsvorgang, indem über den Steuersocket die Personalisierungsanforderungsnachricht an das CAS gesendet wird. Mit dieser Nachricht wird das CAS über den zu verwendenden Kommunikationskanal, bzw den Chipkarten-Personalisierungssocket, für die Personalisierungskommandos und Personalisierungsnachrichten informiert, ferner über das Kommunikationsprotokoll und andere Informationen über die Chipkarte (z. B. die Resetinformationen) und die Anforderung, die verarbeitet wird. Das CAS wiederum sendet die Personalisierungskommandos an den entsprechenden Chipkarten-Personalierungssocket unter Verwendung des korrekten Kommunikationsprotokolls. Gemäß dem vorgeschriebenen Kommunikationsprotokoll entpackt dann das CKS die Personalisierungskommandos und sendet sie an den Chipkarten-Koppler. Ein Teil der Personalisierungskommandos kann dabei dabei z. B. Steuerinformation sein, die einen Timeout anzeigt, der für die Ausführungsdauer des Personalisierungskommandos für die Chipkarte gilt. Die Personalisierungskommandos selbst werden transparent ohne Modifizierung auf die Chipkarte übertragen. Ausnahme bilden hier nur Kommandos, die vom CKS einen Reset des Chips anfordern. Die Antwortnachrichten der Chipkarte wiederum werden transparent über das CKS an das CAS unter Verwendung des gleichen Personalisierungssockets und desselben Kommunikationsprotokolls übertragen.

Unterschiedliche Arten von Nachrichten werden über unterschiedliche Socketgruppen ausgetauscht. Personalisierungsnachrichten, die Personalisierungskommandos von dem CAS repräsentieren, sowie die Chipkartenantworten auf diese Kommandos, werden über den Chipkarten-Personalisierungssocket ausgetauscht bzw. übertragen. Steuernachrichten während der Verarbeitung, etwa um den Chipkarten-Personalisierungsvorgang anzufordern, die Erledigung der Personalisierung zu berichten, oder um Statusnachrichten auszutauschen, werden unter Verwendung des Steuersockets übertragen. Abgesehen von den Resetanforderungen für eine Chipkarte, welche vom CAS an das CKS übertragen werden, werden die Personalisierungsnachrichten transparent zwischen der Chipkarte und dem CAS über das CKS übertragen. Während des Personalisierungsvorganges können auch Chipkarten-Resetanforderungen vom CAS über den Personalisierungssocket an das CKS geschickt werden. Der Steuersocket wiederum wird verwendet, um Steuernachrichten zu und von dem Chipkarten-Administrationssystem zu übertragen. Für ein Chipkarten-Kontrollsystem gibt es genau einen Steuersocket. Die über diesen Socket übertragenen Steuernachrichten umfassen dabei beispielsweise:
- Anforderungen zur Durchführung einer Personalisierung
- Personalisierungs-Resultatnachrichten.

Die Personalisierungssockets werden dazu verwendet, Personalisierungsnachrichten zwischen dem CAS und dem CKS während des Programmierungsvorgangs des Chips zu übertragen. Ein Chipkarten-Koppler ist dabei logisch einem dieser Personalisierungssockets zugeordnet. Das Chipkarten-Kontrollsystem baut intern einen Kommunikationskanal zwischen dem Personalisierungssocket und dem entsprechenden Chipkarten-Koppler auf. Die Programmierkommandos (außer Resetanforderunngen) und Antwortnachrichten der Chipkarte werden transparent über den so entstehenden logischen Kommunikationskanal zwischen Chipkarte und Chipkarten-Administrationssystem übertragen. Das Chipkarten-Kontrollsystem muß diese lediglich gemäß dem Kommunikationsprotokoll entpacken bzw. korrekt weiterleiten, und zwar an den Chipkarten-Koppler, der dem Socket zugeordnet ist, von dem die Nachricht empfangen wurde. In umgekehrter Richtung muß das Chipkarten-Kontrollsystem die Antwortnachricht gemäß dem Anwendungs-Protokollformat "verpacken" bzw. formatieren und sie an das Chipkarten-Administrationssystem unter Verwendung des zugeordneten Personalisierungssockets abschicken.

Gibt es für die Chipkarte kein Resetkommando, muß ein Reset über das entsprechende elektrische Signal an den Chipkartenkontakten ausgelöst werden. Dieses Signal wird vom Chipkarten-Koppler erzeugt. Wird während des Personalisierungsablaufs ein Reset der Chipkarte benötigt, so wird dieser mit einem Resetkommando über den Personalisierungssocket an das CKS übertragen. Dieses Kommando muß vom CKS interpretiert werden und in ein entsprechendes Resetkommmando für den Chipkarten-Koppler umgewandelt werden. Die Chipkartenantwort auf den Reset (ATR, answer to reset) wird wiederum transparent an das CAS übertragen.

Nach Erledigung der Personalisierung der Chipkarte erzeugt das CAS eine Personalisierungs-Resultatnachricht und sendet diese ab. Diese Nachricht umfaßt das Programmierergebnis und eventuell einige weitere Informationen, z.B. Informationen, die für die weitere Verarbeitung der Chipkarte wichtig sind. Falls während des Personalisierungsvorgangs ein Fehler auftritt, wird die Chipkarte von dem CKS als fehlerhaft aussortiert.

Auch in vorliegendem Ausführungsbeispiel dient das Chipkarten-Kontrollsystem als Router, der die letztlich für die Chipkarte bestimmten Daten vom Chipkarten-Administrationssystem empfängt und transparent, d. h. unverändert, an die Chipkarte weiterleitet, für die die Daten bestimmt sind. Bei diesem Ausführungsbeispiel ist es jedoch möglich, mehrere Chipkarten bzw. die Personalisierung für mehrere Chipkarten gleichzeitig zu verarbeiten.

In einem weiteren Ausführungsbeispiel ist es denkbar, daß mehrere Chipkarten-Kontrollsysteme, gegebenenfalls über verschiedene Datenleitungen, mit einem Chipkarten-Administrationssystem verbunden sind, daß beispielsweise jedes dieser Chipkarten-Kontrollsysteme eine oder mehrere Chipkarten bearbeiten kann und daß die von den unterschiedlichen Chipkarten-Kontrollsystemen angeforderten Anwendungen unterschiedlich sind. Über eine am Chipkarten-Kontrollsystem vorgesehene Benutzerschnittstelle oder die Zuordnung von Produktionsaufträgen zu unterschiedlichen Auftragstypen kann das CKS unter mehreren möglichen Anwendungen, etwa einer Personalisierung, Initialisierung oder der Durchführung einer weiteren Chipkartenanwendung wie etwa einer Authentifizierung auswählen.

Für den Fachmann ergeben sich leicht weitere Modifikationen der vorliegenden Erfindung. Beispielsweise kann es sich bei den beschriebenen Chipkartenanwendungen neben einer Authentifizierung auch um andere Anwendungen handeln, bei denen ggf. ein interaktiver Informationsaustausch zwischen Chipkarten-Kontrollsystem und dem Karteninhaber vorgesehen sein kann.

Beispielsweise kann auch das Kontaktieren der Chipkarte drahtlos erfolgen. Anstelle eines mechanischen Kontaktes tritt dabei die Kontaktierung über hochfrequente elektromagnetische Wellen. Dabei erfolgt sowohl die Übermittlung der Daten als auch die Spannungsversorgung drahtlos. Beispielsweise wird mittels einer Induktivität auf der Chipkarte und ausgelöst durch ein Hochfrequenzsignal die Versorgungsspannung der Chipkarte erzeugt. Die weitere Kommunikation erfolgt mittels bekannter Hochfrequenztechniken.

## Patentansprüche

1. Verfahren zum Durchführen einer elektronischen Personalisierung und/oder Initialisierung einer Chipkarte (140) und/oder einer Chipkartenanwendung, **gekennzeichnet durch** die folgenden Verfahrensschritte:
Kontaktieren der Chipkarte (140) **durch** eine erste Vorrichtung (120);
Aufbauen oder Bereitstellen einer Verbindung (110) zwischen der ersten Vorrichtung (120) und einer separaten zweiten Vorrichtung (100) zur Ausbildung eines logischen Kommunikationskanals zur Ermöglichung einer Kommunikation zwischen Chipkarte (140) und der zweiten Vorrichtung (100) über die erste Vorrichtung (120);
Anforderung der Durchführung einer Personalisierung und/oder Initialisierung der Chipkarte (140) und/oder der Durchführung einer Chipkartenanwendung **durch** die zweite Vorrichtung (100) von der ersten Vorrichtung (120); und
Durchführung der angeforderten Personalisierung und/oder Initialisierung der Chipkarte (140) und/oder der angeforderten Chipkartenanwendung unter Verwendung der transparenten Übertragung von Daten und Befehlen zwischen Chipkarte und zweiter Vorrichtung über den logischen Kommunikationskanal, **dadurch** gekennzeichnet, dass von der zweiten Vorrichtung (100) abgeschickte Befehle und Daten direkt für die Chipkarte (140) bestimmt sind, und die Chipkartenkommandoschnittstelle in der zweiten Vorrichtung (100) implementiert ist.

2. Verfahren nach Anspruch 1, bei dem
die Anforderung einer Anwendung Informationen über den zu verwendenden logischen Kommunikationskanal und die durchzuführende Anwendung enthält;
die zur Durchführung der angeforderten Personalisierung und/oder Initialisierung und/oder Chipkartenanwendung erforderliche Ablauflogik von der zweiten Vorrichtung (100) ausgeführt wird; und
die zweite Vorrichtung (100) das Ergebnis bezüglich der durchgeführten Ablauflogik an die erste Vorrichtung (120) übermittelt.

3. Verfahren nach einem der beiden vorhergehenden Ansprüche, ferner **gekennzeichnet dadurch, daß**
die Anforderung der Durchführung einer Personalisierung und/oder Initialisierung und/oder der Durchführung einer Chipkartenanwendung Informationen bezüglich der Kommunikation, der zu verwendenden Kommunikationsadresse und des zu verwendenden Kommunikationsprotokolls enthält, sowie ferner Informationen über
die angeforderte Anwendung, die kontaktierte Chipkarte (140) und eine Identifikation des angeforderten Vorgangs innerhalb der ersten Vorrichtung und daß
nach Durchführung der Personalisierung und/oder Initialisierung und/oder Chipkartenanwendung der logische Kommunikationskanal durch die erste Vorrichtung abgebaut wird.

4. Verfahren nach einem der vorhergehenden Ansprüche, **dadurch gekennzeichnet, daß**
die Ablauflogik oder Algorithmen für deren Durchführung sowie entsprechende Schlüssel in der zweiten Vorrichtung (120) gespeeichert sind.

5. Verfahren nach einem der vorhergehenden Ansprüche, bei dem
die von der zweiten Vorrichtung (120) ausgeführte Ablauflogik eine Authentifizierung ist.

6. Vorrichtung zum Durchführen einer elektronischen Personalisierung und/oder Initialisierung einer Chipkarte (140) und/oder zum Durchführen einer Chipkartenanwendung, welche aufweist:
eine Einrichtung zum Bereitstellen oder Aufbauen einer Verbindung (110) mit einer weiteren Vorrichtung (120) die zum Kontaktieren einer Chipkarte (140) dient, zur Ausbildung eines logischen Kommunikationskanals zur Ermöglichung der Kommunikation zwischen der Chipkarte (140) und der Vorrichtung (100) über die weitere Vorrichtung (120);
eine Einrichtung zur Aufnahme der Anforderung zur Durchführung einer Personalisierung und/oder Initialisierung und/oder Durchführung einer Chipkartenanwendung über die Verbindung (110);
eine Einrichtung zur Durchführung einer Ablauflogik für die angeforderte Personalisierung und/oder Initialisierung und/oder durchzuführende Chipkartenanwendung in Reaktion auf die Anforderung; gekenzeichnet durch
eine Einrichtung zur transparenten Übertragung von die Durchführung betreffenden Daten und Befehlen von und zu der Chipkarte (140) über den logischen Kommunikationskanal; wobei von der Vorrichtung (100) abgeschickte Befehle und Daten direkt für die Chipkarte (140) bestimmt sind, und die Chipkartenkommandoschnittstelle in der Vorrichtung (100) implementiert ist.

7. Vorrichtung zur Durchführung einer elektronischen Personalisierung und/oder Initialisierung einer Chipkarte (140) und/oder zur Durchführung einer Chipkartenanwendung, welche aufweist:
eine Einrichtung (130) zum Kontaktieren einer Chipkarte;
eine Einrichtung zum Bereitstellen oder zum Aufbauen einer Verbindung (110) mit einer weiteren Vorrichtung (100), in der die zur Durchführung der Personalisierung und/oder Initialisierung und/oder Durchführung der Chipkartenanwendung erforderliche Ablauflogik ausgeführt wird, zur Ausbildung eines logischen Kommunikationskanals zur Ermöglichung einer Kommunikation zwischen Chipkarte (140) und der weiteren Vorrichtung (100) über die Vorrichtung (120);
eine Einrichtung zum Anfordern der Durchführung der Personalisierung und/oder Initialisierung und/oder der Chipkartenanwendung durch die weitere Vorrichtung; **gekennzeichnet durch**
eine Einrichtung zur transparenten Übertragung von die Durchführung betreffenden Daten und Befehlen zwischen der weiteren Vorrichtung und der Chipkarte (140) über den logischen Kommunikationskanal; wobei von der weiteren Vorrichtung (100) abgeschickte Befehle und Daten direkt für die Chipkarte (140) bestimmt sind, und die Chipkartenkommandoschnittstelle in der weiteren Vorrichtung (100) implementiert ist.

8. System zur Durchführung einer Personalisierung und/oder Initialisierung und/oder einer Chipkartenanwendung, welches umfaßt:
eine erste Vorrichtung (120) zum Kontaktieren der Chipkarte;
eine separate zweite Vorrichtung (100) zum Durchführen für die Personalisierung und/oder Initialisierung einer Chipkarte (140) und/oder zur Durchführung einer Chipkartenanwendung erforderlicher Ablauflogik in Reaktion auf eine Anforderung durch die erste Vorrichtung (120);
eine Einrichtung zum Bereitstellen oder Aufbaue einer Verbindung (110) zwischen der ersten Vorrichtung (120) und der zweiten Vorrichtung (100) zur Ausbildung eines logischen Kommunikationskanals zur Ermöglichung der Kommunikation zwischen der Chipkarte (140) und der zweiten Vorrichtung (100) über die erste Vorrichtung (120); **gekennzeichnet durch**
eine Einrichtung zur transparenten Übertragung von die Durchführung betreffenden Daten und Befehlen zwischen der zweiten Vorrichtung (100) und der Chipkarte (140) über den logischen Kommunikationskanal; wobei von der zweiten Vorrichtung (100) abgeschickte Befehle und Daten direkt für die Chipkarte (140) bestimmt sind, und die Chipkartenkommandoschnittstelle in der zweiten Vorrichtung (100) implementiert ist.

9. System nach Anspruch 8, bei dem die erste Vorrichtung (320) ferner umfaßt:
eine Einrichtung (324) zum Kontaktieren mehrerer Chipkarten (340, 342);
eine Einrichtung zur Ausbildung jeweils mindestens eines logischen Kommunikationskanals (310, 312) zwischen jeweils einer der Chipkarten (340, 342) und der zweiten Vorrichtung (300) über die erste Vorrichtung (320); und
eine Einrichtung zum Absenden mehrerer Anforderungen zur gleichzeitigen Durchführung von mehreren Personalisierungen und/oder Initialisierungen und/oder Chipkartenanwen-dungen durch die zweite Vorrichtung.

10. System nach Anspruch 8 oder 9, bei dem die zweite Vorrichtung (300) ferner umfaßt:
eine Einrichtung zum Bereitstellen oder Aufbauen mehrerer logischer Kommunikationskanäle; und
eine Einrichtung zum gleichzeitigen Durchführen mehrerer Personalisierungen und/oder Initialisierungen und/oder Chipkartenanwendungen in Reaktion auf Anforderungen von einer oder mehreren ersten Vorrichtungen (320).

11. System nach einem der Ansprüche 8 bis 10, das ferner umfaßt:
eine Einrichtung der ersten Vorrichtung (320) zum Erzeugen eines oder mehrerer Server-Sockets (370,..., 380);
eine Einrichtung der zweiten Vorrichtung (300) zum Erzeugen eines oder mehrerer Client-Sockets (390); wobei
ein oder mehr Client-Server-Socketpaare zur gleichzeitigen Kommunikation zwischen Chipkarte (340, 342) und zweiter Vorrichtung (300) verwendet werden.

12. System nach einem der Ansprüche 8 bis 11, bei dem ein Client-Server-Socketpaar zur Übertragung von Befehlen oder Daten betreffend die Personalisierung und/oder Initialisierung und/oder Chipkartenanwendung verwendet wird, und
ein Client-Server-Socketpaar zur Übertragung von Steuernachrichten verwendet wird.

13. System nach einem der Ansprüche 8 bis 12, bei dem die von der zweiten Vorrichtung (100, 300) durchgeführte Ablauflogik eine Authentifizierung oder eine andere sicherheitskritische Anwendung umfaßt.

14. System nach einem der Ansprüche 8 bis 13, bei dem die zweite Vorrichtung (100, 300) mindestens eines der folgenden Merkmale umfaßt:
eine Einrichtung zur Durchführung mindestens eines Teils der zur Durchführung einer sicherheitsrelevanten Anwendung erforderlichen Ablauflogik; und
die zur Durchführung einer sicherheitsrelevanten Anwendung erforderlichen Schlüssel.

15. System nach einem der Ansprüche 8 bis 14, bei dem
die zweite Vorrichtung (100, 300) eine Einrichtung zur gleichzeitigen Bearbeitung mehrerer Anforderungen aufweist und
die erste und zweite Vorrichtung (120, 320, 100, 300) jeweils eine Einrichtung zum Ver- bzw. Entschlüsseln der zwischen ihnen übertragenen Daten umfassen.

## Claims

1. Method for carrying out an electronic chip-card (140) personalization and/or initialization and/or a chip-card application, **characterized by** the following procedural steps:
contacting the chip card (140) with a first apparatus (120);
setting up or providing a connection (110) between the first apparatus (120) and a separate second apparatus (100) for establishing a logical communication link to provide the means for communication between chip card (140) and the second apparatus (100) via the first apparatus (120);
request by the first apparatus (120) for the carrying out of chip-card (140) personalization and/or initialization and/or the execution of a chip-card application by the second apparatus (100); and
carrying out of the requested chip-card (140) personalization and/or initialization and/or the requested chip-card application using the transparent transmission of data and commands between chip card and the second apparatus via the logical communication link **characterised in that** commands and data sent by the second apparatus (100) are meant directly for the chip card (140) and that the chip-card command interface is implemented in the second apparatus (100).

2. Method according to claim 1, in which
the request for an application contains information on the logical communication link to be used and the application to be carried out;
the process logic required to carry out the requested personalization and/or initialization and/or chip-card application is executed by the second apparatus (100); and
the second apparatus (100) sends the result regarding the process logic carried out to the first apparatus (120).

3. Method according to one of the two preceding claims, further **characterised in that**
the request for the carrying out of personalization and/or initialization and/or the execution of a chip-card application contains information regarding the communication, the communication address to be used and the communication protocol to be used, as well as information on
the requested application, the contacted chip card (140) and an ID of the requested process within the first apparatus, and that
the logical communication link is dismantled by the first apparatus after the personalization and/or initialization and/or chip-card application has been carried out.

4. Method according to one of the preceding claims, **characterised in that** the process logic or algorithms for the carrying out of same as well as corresponding keys are stored in the second apparatus (120).

5. Method according to one of the preceding claims, in which
the process logic executed by the second apparatus (120) is an authentication.

6. Apparatus for the carrying out of electronic chip-card (140) personalization and/or initialization and/or for the carrying out of a chip-card application, which comprises:
a device for providing or setting up a connection (110) with another apparatus (120), which serves the purpose of contacting a chip card (140), to establish a logical communication link to provide the means for communication between the chip card (140) and the apparatus (100) via another apparatus (120);
a device for receiving the request for the carrying out of personalization and/or initialization and/or for the carrying out of a chip-card application via the connection (110);
a device for carrying out a process logic for the requested personalization and/or initialization and/or chip-card application to be carried out in response to the request; **characterised in that**
a device for transmitting in a transparent way data and commands concerning the carrying out to and from the chip card (140) via the logical communication link whereas commands and data sent by the apparatus (100) are meant directly for the chip card (140) and the chip-card command interface is implemented in the apparatus (100).

7. Apparatus for the carrying out of electronic chip-card (140) personalization and/or initialization and/or the carrying out of a chip-card application, which comprises:
a device (130) for contacting a chip card;
a device for providing or setting up a connection (110) with another apparatus (100), in which the process logic required to carry out the personalization and/or initialization and/or to carry out the chip-card application is executed, and for setting up a logical communication link to provide the means for communication between chip card (140) and another apparatus (100) via the apparatus (120);
a device for requesting the carrying out of personalization and/or initialization and/or the chip-card application by another apparatus; **characterised in that**
a device for transmitting in a transparent way data concerning the carrying out and commands between the other apparatus and the chip card (140) via the logical communication link whereas commands and data sent by the further apparatus (100) are meant directly for the chip card (140) and the chip-card command interface is implemented in the further apparatus (100).

8. System for the carrying out of personalization and/or initialization and/or a chip-card application, which comprises:
a first apparatus (120) for contacting the chip card;
a separate second apparatus (100) for carrying out the process logic required for chip-card (140) personalization and/or initialization and/or for carrying out a chip-card application in response to a request by the first apparatus (120);
a device for providing or setting up a connection (110) between the first apparatus (120) and the second apparatus (100) to establish a logical communication link to provide the means for communication between the chip card (140) and the second apparatus (100) via the first apparatus (120); **characterised in that**
a device for transmitting in a transparent way data and commands concerning the carrying out between the second apparatus (100) and the chip card (140) via the logical communication link whereas commands and data sent by the second apparatus (100) are meant directly for the chip-card (140) and the chip-card command interface is implemented in the second apparatus (100).

9. System according to claim 8, in which the first apparatus (320) further comprises:
a device (324) for contacting several chip cards (340, 342);
a device for establishing at least one logical communication link (310, 312) between each of the chip cards (340, 342) and the second apparatus (300) via the first apparatus (320); and
a device for dispatching several requests for the carrying out of several personalization and/or initialization and/or chip-card applications by the second apparatus at the same time.

10. System according to claim 8 or 9, in which the second apparatus (300) further comprises:
a device for providing or setting up several logical communication links; and
a device for carrying out several personalizations and/or initializations and/or chip-card applications in response to requests received from one or several first apparatus (320) at the same time.

11. System according to one of claims 8 to 10, which further comprises:
a device of the first apparatus (320) for generating one or several server sockets (370, ..., 380);
a device of the second apparatus (300) for generating one or several client sockets (390); whereas
one or several client-server socket pairs are used for the simultaneous communication between chip card (340, 342) and second apparatus (300).

12. System according to one of claims 8 to 11, in which a client-server socket pair is used to transmit commands or data concerning the personalization and/or initialization and/or chip-card application, and
a client-server socket pair is used to transmit control messages.

13. System according to one of claims 8 to 12, in which the process logic performed by the second apparatus (100, 300) comprises an authentication or another application critical of security.

14. System according to one of claims 8 to 13, in which the second apparatus (100, 300) comprises at least one of the following features:
a device for carrying out at least one portion of the process logic required to carry out an application relevant to security; and
the keys required to carry out an application relevant to security.

15. System according to one of claims 8 to 14, in which
the second apparatus (100, 300) comprises a device for processing several requests at the same time and
the first and the second apparatus (120, 320, 100, 300) each comprise a device for encoding or decoding the data transmitted between them.

## Revendications

1. Procédé pour l'exécution de la personnalisation électronique et/ou de l'initialisation d'une carte à puce (140) et/ou d'une application de carte à puce, **caractérisé par** les étapes opératoires suivantes :
mise en contact de la carte à puce (140) par un premier dispositif (120) ;
établissement ou mise à disposition d'une liaison (110) entre le premier dispositif (120) et un second dispositif (100) séparé pour mettre en place un canal de communication logique visant à permettre une communication entre la carte à puce (140) et le second dispositif (100) par l'intermédiaire du premier dispositif (120) ;
demande par le premier dispositif (120) de l'exécution de la personnalisation et/ou de l'initialisation de la carte à puce (140) et/ou de l'exécution d'une application de carte à puce par le second dispositif (100), et
exécution de la personnalisation demandée et/ ou de l'initialisation de la carte à puce (140) et/ou de l'application de carte à puce demandée en utilisant la transmission transparente de données et d'instructions entre la carte à puce et le second dispositif par le canal de communication logique, **caractérisé en ce que** des données et des instructions envoyées par le second dispositif (100) sont destinées directement à la carte à puce (140) et l'interface d'instruction de carte à puce est réalisée dans le second dispositif (100).

2. Procédé selon la revendication 1, dans lequel
la demande d'une application contient des informations sur le canal de communication logique à utiliser et sur l'application à exécuter ;
la logique d'exécution nécessaire pour l'exécution de la personnalisation demandée et/ou de l'initialisation et/ou de l'application de carte à puce est exécutée par le second dispositif (100), et
le second dispositif (100) transmet au premier dispositif (120) le résultat relatif à la logique d'exécution exécutée.

3. Procédé selon l'une des deux revendications précédentes, **caractérisé en outre en ce que**
la demande d'exécution de la personnalisation et/ou de l'initialisation et/ou d'exécution d'une application de carte à puce contient des informations relatives à la communication, à l'adresse de communication à utiliser et au protocole de communication à utiliser, ainsi que des informations sur
l'application demandée, la carte à puce (140) mise en contact et une identification de l'opération demandée à l'intérieur du premier dispositif et que
après exécution de la personnalisation et/ou de l'initialisation et/ou de l'application de carte à puce, le premier dispositif supprime le canal de communication logique.

4. Procédé selon l'une des revendications précédentes, **caractérisé en ce que**
la logique d'exécution ou les algorithmes pour l'exécution de celle-ci ainsi que des codes correspondants sont mémorisés dans le second dispositif (120).

5. Procédé selon l'une des revendications précédentes, dans lequel
la logique d'exécution exécutée par le second dispositif (120) est une authentification.

6. Dispositif pour exécuter la personnalisation électronique et/ou l'initialisation d'une carte à puce (140) et/ou pour exécuter une application de carte à puce, lequel dispositif comporte :
un équipement pour mettre à disposition ou établir une liaison (110) avec un autre dispositif (120) qui sert à mettre en contact une carte à puce (140), pour mettre en place un canal de communication logique visant à permettre la communication entre la carte à puce (140) et le dispositif (100) par l'intermédiaire de l'autre dispositif (120) ;
un équipement destiné à recevoir la demande d'exécution de la personnalisation et/ou de l'initialisation et/ou d'exécution d'une application de carte à puce via la liaison (110) ;
un équipement pour l'exécution d'une logique d'exécution pour la personnalisation demandée et/ou l'initialisation et/ou l'application de carte à puce à exécuter en réaction à la demande, **caractérisé par**
un équipement pour la transmission transparente de données et d'instructions concernant l'exécution en provenance et à destination de la carte à puce (140) par le canal de communication logique, les données et les instructions envoyées par le dispositif (100) étant destinées directement à la carte à puce (140), et l'interface d'instruction de carte à puce étant mise en application dans le dispositif (100).

7. Dispositif pour exécuter une personnalisation électronique et/ou une initialisation d'une carte à puce (140) et/ou pour exécuter une application de carte à puce, lequel dispositif comporte :
un équipement (130) pour mettre en contact une carte à puce ;
un équipement pour mettre à disposition ou pour établir une liaison (110) avec un autre dispositif (100) dans lequel est exécutée la logique d'exécution nécessaire pour exécuter la personnalisation et/ou l'initialisation et/ou exécuter l'application de carte à puce, pour mettre en place un canal de communication logique visant à permettre une communication entre la carte à puce (140) et l'autre dispositif (100) par l'intermédiaire du dispositif (120),
un équipement pour demander l'exécution de la personnalisation et/ou de l'initialisation et/ou de l'application de carte à puce par l'autre dispositif, **caractérisé par**
un équipement pour la transmission transparente de données et d'instructions concernant l'exécution entre l'autre dispositif et la carte à puce (140) par le canal de communication logique, les données et les instructions envoyées par l'autre dispositif (100) étant destinées directement à la carte à puce (140), et l'interface d'instruction de carte à puce étant réalisée dans l'autre dispositif (100).

8. Système pour l'exécution d'une personnalisation et/ou d'une initialisation et/ou d'une application de carte à puce, lequel système comprend :
un premier dispositif (120) pour mettre en contact la carte à puce ;
un second dispositif (100) séparé pour exécuter une logique d'exécution nécessaire pour la personnalisation et/ou l'initialisation d'une carte à puce (140) et/ou pour exécuter une application de carte à puce en réaction à une demande par le premier dispositif (120) ;
un équipement pour mettre à disposition ou établir une liaison (110) entre le premier dispositif (120) et le second dispositif (100) pour mettre en place un canal de communication logique visant à permettre la communication entre la carte à puce (140) et le second dispositif (100) par l'intermédiaire du premier dispositif (120), **caractérisé par**
un dispositif pour la transmission transparente de données et d'instructions concernant l'exécution entre le second dispositif (100) et la carte à puce (140) par le canal de communication logique, les données et les instructions envoyées par le second dispositif (100) étant destinées directement à la carte à puce (140), et l'interface d'exécution de carte à puce étant réalisée dans le second dispositif (100).

9. Système selon la revendication 8, dans lequel le premier dispositif (320) comprend en outre :
un équipement (324) pour mettre en contact plusieurs cartes à puce (340, 342) ;
un équipement pour mettre en place au moins un canal de communication logique (310, 312) entre l'une des cartes à puces (340, 342) et le second dispositif (300) par l'intermédiaire du premier dispositif (320), et
un équipement pour envoyer plusieurs demandes pour l'exécution simultanée de plusieurs personnalisations et/ou initialisations et/ou applications de carte à puce par le second dispositif.

10. Système selon la revendication 8 ou 9, dans lequel le second dispositif (300) comprend en outre :
un équipement pour mettre à disposition ou établir plusieurs canaux de communication logiques, et
un équipement pour exécuter simultanément plusieurs personnalisations et/ou initialisations et/ou applications de carte à puce en réaction à des demandes d'un ou plusieurs premiers dispositifs (320).

11. Système selon l'une des revendications 8 à 10, comprenant en outre :
un équipement du premier dispositif (320) pour générer une ou plusieurs sockets (plots) serveur (370,..., 380) ;
un équipement du second dispositif (300) pour générer une ou plusieurs sockets (plots) client (390),
une paire de sockets (plots) client-serveur ou plus étant utilisée pour une communication simultanée entre la carte à puce (340, 342) et le second dispositif (300).

12. Système selon l'une des revendications 8 à 11, dans lequel une paire de sockets client-serveur est utilisée pour la transmission d'instructions ou de données concernant la personnalisation et/ou l'initialisation et/ou l'application de carte à puce, et
une paire de sockets client-serveur étant utilisée pour la transmission de données de commande.

13. Système selon l'une des revendications 8 à 12, dans lequel la logique d'exécution exécutée par le second dispositif (100, 300) comprend une authentification ou une autre application critique du point de vue de la sécurité.

14. Système selon l'une des revendications 8 à 13, dans lequel le second dispositif (100, 300) comprend au moins une des caractéristiques suivantes :
un équipement pour exécuter au moins une partie de la logique d'exécution nécessaire pour exécuter une application relevant de la sécurité, et
les clés nécessaires pour exécuter une application relevant de la sécurité.

15. Système selon l'une des revendications 8 à 14, dans lequel
le second dispositif (100, 300) comporte .un équipement pour le traitement simultané de plusieurs demandes, et
le premier et le second dispositifs (120, 320, 100, 300) comportant chacun un équipement pour coder et décoder les données transmises entre eux.
